# EUROPÄISCHE PATENTANMELDUNG

(11) **EP 2 466 876 A2**
(43) Veröffentlichungstag der Anmeldung: **20.06.2012**
(21) Anmeldenummer: 11009988.4
(22) Anmeldetag: 20.12.2011
(51) Int. Cl.: H04N 5/361, H04N 5/365

(54) **Bildaufzeichnungssystem und Verfahren zum Korrigieren, Komprimieren und Dekomprimieren von Bildsignalwerten**

(30) Priorität: 20.12.2010 DE 102010055229; 10.02.2011 US 201113024761
(71) Anmelder: Arnold&Richter Cine Technik GmbH&Co. Betriebs KG, 80799 München (DE)
(72) Erfinder: Cieslinski, Michael, 85521 Ottobrunn (DE); Oehler, Achim, Dr., 81247 München (DE)
(74) Vertreter: Manitz, Finsterwald & Partner GbR

(57) **Zusammenfassung**

Die Erfindung betrifft ein Verfahren zum Kalibrieren, Komprimieren und Dekomprimieren von Bildsignalwerten eines Bildsensors, der eine Vielzahl von in Reihen und Spalten angeordneten lichtempfindlichen Pixeln aufweist, mit den Schritten: Auslesen der Bildsignalwerte, Komprimieren der Bildsignalwerte, und Dekomprimieren der komprimierten Bildsignalwerte, wobei die Bildsignalwerte unter Verwendung von Kalibrierdatensätzen kalibriert werden, welche für jedes Pixel eine Anzahl von Kalibrierwerten umfassen. Das Verfahren ist dadurch gekennzeichnet, dass jeder Kalibrierdatensatz zumindest einen ersten Kalibrierwert und zumindest einen zweiten Kalibrierwert umfasst, wobei das Kalibrieren der Bildsignalwerte einen ersten Berechnungsschritt umfasst, der vor dem Komprimieren der Bildsignalwerte durchgeführt wird, um unter Verwendung des zumindest einen ersten Kalibrierwerts teilweise korrigierte Bildsignalwerte zu berechnen, und wobei das Kalibrieren der Bildsignalwerte einen zweiten Berechnungsschritt umfasst, der nach dem Dekomprimieren der Bildsignalwerte durchgeführt wird, um unter Verwendung des zumindest einen zweiten Kalibrierwerts vollständig korrigierte Bildsignalwerte zu berechnen. Die Erfindung betrifft ferner ein entsprechendes Bildaufzeichnungssystem.

## Beschreibung

Die Erfindung betrifft ein Verfahren zum Kalibrieren, Komprimieren und Dekomprimieren von Bildsignalwerten eines Bildsensors, der eine Vielzahl von in Reihen und Spalten angeordneten lichtempfindlichen Pixeln aufweist, mit den Schritten: Auslesen der Bildsignalwerte, Komprimieren der Bildsignalwerte, und Dekomprimieren der Bildsignalwerte, wobei die Bildsignalwerte unter Verwendung von Kalibrierdatensätzen kalibriert werden, welche für jedes Pixel eine Anzahl von Kalibrierwerten umfassen. Ferner betrifft die Erfindung ein Bildaufzeichnungssystem mit einem Bildsensor, der eine Vielzahl von in Reihen und Spalten angeordneten lichtempfindlichen Pixeln aufweist, ferner mit einer Ausleseeinrichtung zum Auslesen von Bildsignalwerten aus den Pixeln, einer Kalibriereinrichtung zur Erzeugung von Kalibrierdatensätzen, welche für jedes Pixel eine Anzahl von Kalibrierwerten umfassen, einer Kompressionseinrichtung zum Komprimieren der Bildsignalwerte, einer Dekompressionseinrichtung zum Dekomprimieren der komprimierten Bildsignalwerte, und mit Auswertemitteln, welche dazu ausgelegt sind, die Bildsignalwerte unter Verwendung der Kalibrierdatensätze zu kalibrieren. Das genannte Verfahren und das genannte Bildaufzeichnungssystem beziehen sich insbesondere auf die Erzeugung und Verarbeitung von Laufbilddaten einer elektronischen Filmkamera, die einer Sequenz von nacheinander aufgenommenen Bildern entsprechen.

Die lichtempfindlichen Pixel eines elektronischen Bildsensors erzeugen in Abhängigkeit von der Helligkeit des auftreffenden Lichts analoge Bildsignalwerte, die in einer nachfolgenden Verarbeitungsstufe mittels eines A/D-Wandlers in digitale Bildsignalwerte umgesetzt werden. Die Bildsignalwerte aller Pixel stellen somit ein Abbild der aufgenommenen Szene dar, das gespeichert und zu einem späteren Zeitpunkt auf einem geeigneten Gerät wiedergegeben werden kann, beispielsweise auf einem Monitor oder mittels einer Projektionsvorrichtung.

Die von derartigen Bildsensoren erzeugten Bilder weisen oftmals ein Fixed-Pattern-Rauschen (Fixed-Pattern-Noise, FPN) auf, das sich als Inhomogenitäten in einem eigentlich homogenen Bild bemerkbar macht und vor allem auf Fertigungstoleranzen der einzelnen Pixel zurückgeht. Beim Auslesen werden Bildsignalwerte erzeugt, die auch bei vollständig unbelichteten Pixeln einen von Null verschiedenen Wert aufweisen und von Pixel zu Pixel unterschiedlich sind. Diesen Beitrag zum Fixed-Pattern-Rauschen bezeichnet man als Offset-Artefakt.

Ferner weisen die Pixel zumeist geringfügig unterschiedliche Lichtempfindlichkeiten bzw. Verstärkungsfaktoren auf, so dass eine absolut homogene Beleuchtung geringfügig unterschiedliche Bildsignalwerte erzeugt. Häufig ist das Maß der Variationen in der Lichtempfindlichkeiten bzw. Verstärkung der einzelnen Pixel nicht über den gesamten Empfindlichkeitbereich konstant, sondern weist zusätzlich noch Nichtlinearitäten auf. Dieser Effekt wird als Gain-Artefakt bezeichnet. Beide Artefakte äu-βern sich meist darin, dass in einem aufgenommenen Bild an sich gleichmäßige oder homogene Flächen ein in der Realität nicht vorhandenes Muster aufweisen.

Elektronische Bildsensoren werden vermehrt auch in Kameras zur Auf nahme von Bildsequenzen eingesetzt, die später in einem Kino vorgeführt werden sollen. Dabei werden sehr hohe Anforderungen an die Qualität der aufgenommenen Bilder wie auch an die Auflösung gestellt. Zusätzlich ist es wünschenswert, dass Kameras mit elektronischen Bildsensoren zugleich eine hohe Bildwiederholrate aufweisen, damit auch Zeitlupenaufnahmen möglich werden.

So werden beispielsweise für ein Bild mit einer Auflösung von 4096 x 3072 Pixeln Bildsensoren eingesetzt, die eine Auflösung von 5888 x 4000 Pixeln aufweisen. Um Zeitlupenaufnahmen auch bei Sportaufnahmen zu ermöglichen, werden Bildsensoren mit Bildwiederholraten von beispielsweise 200 Bildern pro Sekunde ausgelesen.

Um die gewünschte, insbesondere für Kinoprojektionen erforderliche Bildqualität zu erreichen, ist es erforderlich, das in den Bildern enthaltene Fixed-Pattern-Rauschen zuverlässig herauszurechnen. Dieser Vorgang wird auch als Kalibrieren bezeichnet. Zu diesem Zweck werden so genannte Kalibrierdatensätze erzeugt, welche aus mehreren Kalibrierbildern gewonnen werden, die unter genau definierten, zumeist homogenen Beleuchtungsbedingungen aufgenommen wurden. Beispielsweise kann eine Korrektur des Offsets dadurch erfolgen, dass von einem unverarbeiteten Bild oder Rohbild pixelweise ein ohne Beleuchtung aufgenommenes so genanntes "Offset-Bild" subtrahiert wird. Zur Korrektur des Gain-Artefakts wird das Offset-korrigierte Bild durch ein so genanntes "Gain-Bild" dividiert, das mit einer homogenen Beleuchtung aufgenommen und gegebenenfalls auf einen Mittelwert normiert wurde.

Zur Korrektur von nichtlinearen Gain-Artefakten ist es ferner möglich, jeweils für unterschiedliche Beleuchtungsstärken ein Gain-Korrekturbild aufzunehmen und aus der somit gewonnenen Beleuchtungsreihe durch geeignete Interpolationsmethoden pixelweise eine nichtlineare Funktion zu gewinnen, die die Empfindlichkeit des jeweiligen Pixels in Abhängigkeit von der Beleuchtungsstärke beschreibt.

Um eine qualitativ hochwertige Kalibrierung der Rohbilddaten durchzuführen, sind für jedes Pixel beispielsweise Kalibrierdatensätze mit sechs bis acht Kalibrierwerten erforderlich, die jeweils eine Datentiefe von 16 Bit aufweisen. Somit ist der Umfang der Kalibrierwerte um ein Mehrfaches höher als der Umfang der Pixeldaten, der beispielsweise bei einem Bildsensor mit zwei Ausgängen pro Pixel 2 x 14 Bit umfassen kann.

Eine Durchführung einer derart aufwendigen Kalibrierung unmittelbar nach der Aufnahme des einzelnen Bildes in der Kamera stößt auf technische Schwierigkeiten, da für die erforderlichen hohen Datenraten, welche sich für die eingangs beispielhaft genannten Auflösungen und Bildwiederholraten ergeben, Recheneinheiten mit einer sehr hohen Bildverarbeitungsleistung erforderlich sind. Dies ist mit einer hohen Energieaufnahme und einer entsprechenden Verlustleistung verbunden, was insbesondere bei einer tragbaren Kamera zu erheblichen Nachteile wie beispielsweise einer geringen Akkulaufzeit oder thermischen Problemen führen kann.

Weiterhin ist es erforderlich, die Bilddaten, d.h. die genannten Bildsignalwerte, für die Datenaufzeichnung zur Reduktion der Datenmenge zu komprimieren. Um zumindest das Problem der Kalibrierung innerhalb der Kamera zu umgehen, besteht die Möglichkeit, die Bilddaten zunächst ohne Kalibrierung zu komprimieren, die komprimierten Bilddaten aufzuzeichnen und die notwendige Kalibrierung erst nach dem Dekomprimieren in einer externen Recheneinheit zu kalibrieren, welche über die gewünschte Leistungsfähigkeit verfügt. Da jedoch bei den unkalibrierten Bilddaten der eigentlichen Bildinformation ein hoher Anteil an Fixed-Pattern-Rauschen überlagert ist, wird die Kompression negativ beeinflusst, was insbesondere zu unzureichenden Kompressionsraten oder auch zu Kompressionsartefakten führen kann.

Es ist daher die Aufgabe der Erfindung, bei dem eingangs genannten Verfahren und Bildverarbeitungsbildaufzeichnungssystem die Bildqualität und die Kompressionsrate zu verbessern.

Die Lösung der Aufgabe erfolgt durch ein Verfahren mit den Merkmalen des Anspruchs 1 und insbesondere dadurch, dass jeder Kalibrierdatensatz zumindest einen ersten Kalibrierwert und zumindest einen zweiten Kalibrierwert umfasst, wobei das Kalibrieren der Bildsignalwerte einen ersten Berechnungsschritt umfasst, der vor dem Komprimieren der Bildsignalwerte durchgeführt wird, um unter Verwendung des zumindest einen ersten Kalibrierwerts teilweise korrigierte Bildsignalwerte zu berechnen, und wobei das Kalibrieren der Bildsignalwerte einen zweiten Berechnungsschritt umfasst, der nach dem Dekomprimieren der Bildsignalwerte durchgeführt wird, um unter Verwendung des zumindest einen zweiten Kalibrierwerts vollständig korrigierte Bildsignalwerte zu berechnen.

Bei der Erzeugung der Kalibrierdatensätze werden demnach so viele Kalibrierwerte oder Korrekturwerte ermittelt, wie es nötig ist, um bei der Kalibrierung die gewünschte Bildqualität zu erhalten. Im ersten Berechnungsschritt, der der Kompression der Bildsignalwerte vorangeht, wird jedoch nur ein Teil der im jeweiligen Kalibrierdatensatz vorhandenen Kalibrierwerte für eine Kalibrierung benutzt, nämlich die so genannten ersten Kalibrierwerte. Diese "Vor-Kalibrierung" benötigt einen wesentlich geringeren Rechenaufwand, als es für eine vollständige Kalibrierung unter Ausnutzung aller im Kalibrierdatensatz vorhandenen Kalibrierwerte erforderlich wäre.

Mit der Vor-Kalibrierung wird zwar noch nicht die größtmögliche Bildqualität erreicht, diese ist jedoch ausreichend, um anschließend eine weitgehend störungs- und artefaktfreie Kompression der Bildsignalwerte mit hohen Kompressionsraten durchzuführen.

Im zweiten Berechnungsschritt wird dann eine so genannte "Nach-Kalibrierung" der dekomprimierten Bildsignalwerte vorgenommen, um letztlich vollständig korrigierte, d.h. vollständig kalibrierte Bilddaten zu erhalten, so dass diese Bilddaten im Wesentlichen kein Fixed-Pattern-Rauschen mehr enthalten und damit die gewünschte Bildqualität aufweisen. Hierfür werden die weiteren Kalibrierwerte (die so genannten zweiten Kalibrierwerte) verwendet, und optional auch die ersten Kalibrierwerte der Vor-Kalibrierung.

"Vollständig korrigierte Bildsignalwerte" bedeutet im Zusammenhang mit der Erfindung, dass die zur Verfügung stehenden Kalibierwerte vollständig auf die Bildsignalwerte angewandt worden sind. Dies schließt jedoch nicht aus, dass später noch andere Korrekturen oder Umwandlungen an den Bildsignalwerten vorgenommen werden.

Mit dem erfindungsgemäßen Verfahren ist es möglich, sowohl die Kompressionsrate zu erhöhen als auch etwaige, mit der Kompression verbundene Artefakte zu minimieren. Zugleich wird die zur Durchführung der Vor-Kalibrierung erforderliche Rechenleistung gering gehalten, so dass die Vor-Kalibrierung, also der erste Berechnungsschritt, bereits innerhalb einer den Bildsensor umfassenden Kamera durchgeführt werden kann. Das Komprimieren der Bildsignalwerte nach der "Vor-Kalibrierung" kann nach einem beliebigen herkömmlichen Verfahren erfolgen. Bevorzugt ist hierbei ein Verfahren, bei dem die Bildsignalwerte verlustfrei oder mit einer garantierten Qualität komprimiert werden, wobei auch Bildsignalwerte mit einer großen Abweichung von einem zugeordneten Normwert oder Mittelwert lediglich mit einem geringen Fehler verarbeitet werden.

Gemäß einer vorteilhaften Ausgestaltung der Erfindung umfasst der Kompressionsschritt ein Komprimieren der teilweise korrigierten Bildsignalwerte. Der zweite Berechnungsschritt umfasst vorzugsweise das Berechnen der vollständig korrigierten Bildsignalwerte aus den dekomprimierten, teilweise korrigierten Bildsignalwerten.

Bevorzugt ist ferner, wenn die Bittiefe des ersten Kalibrierwerts kleiner ist als die Bittiefe eines den ersten und den zweiten Kalibrierwert umfassenden Gesamtkalibrierwerts. Beispielsweise wird für die Durchführung einer Offset-Korrektur mit der gewünschten Qualität ein Kalibrierwert mit einer Genauigkeit oder Bittiefe von 16 Bit benötigt. Dieser Gesamt-Kalibrierwert wird in einen ersten und einen zweiten Kalibrierwert aufgeteilt, welche z.B. jeweils eine Bittiefe von 8 Bit aufweisen. In diesem Fall kann der erste Kalibrierwert die 8 Bit mit dem niedrigsten Stellenwert umfassen, während der zweite Kalibrierwert die 8 Bit mit dem höchsten Stellenwert umfasst. Entsprechend kann auch ein Kalibrierwert für die Gain-Korrektur auf einen ersten und einen zweiten Gain-Kalibrierwert mit z.B. jeweils 8 Bit Genauigkeit aufgeteilt werden. Aufgrund der geringeren Bittiefe des ersten Kalibrierwerts kann es vorkommen, dass eine gewisse Anzahl von Pixeln, die eine besonders große Abweichung hinsichtlich des Offsets und/oder des Gains von einem Mittelwert haben, auch nach der Anwendung der ersten Korrekturwerte einen gewissen, visuell wahrnehmbaren Restanteil an Fixed-Pattern-Rauschen aufweisen. Für die Komprimierbarkeit der Bildsignalwerte spielt dies jedoch keine signifikante Rolle, da die Anzahl solcher Pixel bezogen auf die Gesamtzahl aller Pixel des Bildsensors sehr gering ist. Für den Großteil der Pixel sind die Abweichungen hinsichtlich des Offsets und/oder des Gains von einem Mittelwert und somit die Kalibrierwerte nämlich klein, so dass bereits bei der Vor-Kalibrierung eine nahezu vollständige Kalibrierung erreicht wird. Der erste Kalibrierwert muss nicht zwingend die niedrigstwertigen Bit umfassen, sondern kann bei dem vorgenannten Beispiel (Genauigkeit oder Bittiefe von 16 Bit) auch den acht Bit mit dem 3. bis 10. Stellenwert entsprechen.

Weiterhin ist es auch möglich, erste Kalibrierwerte mit reduzierter Genauigkeit und zweite Kalibrierwerte zu verwenden, welche die gleiche Genauigkeit wie die ursprünglich ermittelten Gesamtkalibrierwerte besitzen. In diesem Fall erfolgt die Nach-Kalibrierung anhand der vor-kalibrierten Bildsignalwerte, wobei beispielsweise nach einer linearen Vor-Kalibrierung noch eine nicht-lineare Nach-Kalibrierung durchgeführt werden kann. Eine solche Vorgehensweise setzt voraus, dass bei der Erzeugung der zweiten Kalibrierwerte berücksichtigt wird, dass die spätere Anwendung der zweiten Kalibrierwerte anhand der bereits durchgeführten (und bekannten) Vor-Kalibrierung erfolgt.

Gemäß einer vorteilhaften Ausgestaltung umfasst das Verfahren ferner ein Speichern der komprimierten Bildsignalwerte.

Gemäß einer weiteren vorteilhaften Ausgestaltung umfasst der erste Kalibrierwert wenigstens einen Offset-Korrekturwert und/oder einen Gain-Korrekturwert. Dadurch ist es möglich, bereits bei der Vor-Kalibrierung einen wesentlichen Anteil an Fixed-Pattern-Rauschen aus den Bilddaten herauszurechnen.

Weiterhin bevorzugt ist es, dass der zweite Kalibrierwert zumindest einen Wert zur Korrektur von Nichtlinearitäten der Pixelempfindlichkeit umfasst. Die zweiten Kalibrierwerte können beispielsweise Polynom-Koeffizienten höherer Ordnung sein, so dass bei der Nach-Kalibrierung auch solche Artefakte korrigiert werden können, die bei einer hohen Dynamik bzw. bei einem hohen Kontrastumfang im Bild auftreten können.

Gemäß einer weiteren bevorzugten Ausgestaltung der Erfindung umfasst das Auslesen der Bildsignalwerte zumindest ein erstes und ein zweites Auslesen, um für jedes Pixel zumindest einen ersten und einen zweiten Bildsignalwert zu erzeugen, wobei der erste Bildsignalwert und der zweite Bildsignalwert unter Verwendung von unterschiedlichen Verstärkungsfaktoren erzeugt werden. Ein derartiges Auslesen wird auch als Dual-Gain-Auslesen bezeichnet und dient dazu, den Dynamikumfang bzw. den Kontrastumfang des Bildsensors zu vergrößern.

Bevorzugt wird zum Berechnen der teilweise korrigierten Bildsignalwerte für den ersten Bildsignalwert und den zweiten Bildsignalwert des jeweiligen Pixels zumindest ein gemeinsamer erster Kalibrierwert, insbesondere ein gemeinsamer Gain-Korrekturwert, verwendet, wobei zum Berechnen der vollständig korrigierten Bildsignalwerte für den ersten Bildsignalwert und den zweiten Bildsignalwert des jeweiligen Pixels separate zweite Kalibrierwerte verwendet werden. Dadurch ist es nicht notwendig, zugleich mit der durch die Dual-Gain-Architektur bedingte Verdopplung der Bildsignalwerte auch die Anzahl der zu verarbeitenden Kalibrierwerte zu verdoppeln. Beispielsweise werden also für die ersten und zweiten Bildsignalwerte jeweils zwei Offset-Kalibrierwerte verwendet, anstelle von zwei-Gain-Kalibrierwerten reicht jedoch zumindest bei der Vor-Kalibrierung ein einziger gemeinsamer Gain-Kalibrierwert aus.

Gemäß einer weiteren vorteilhaften Ausgestaltung der Erfindung wird (abgesehen von einem Übergangsbereich) in Abhängigkeit von der Größe des Bildsignalwerts nur der erste Bildsignalwert oder der zweite Bildsignalwert komprimiert. So ist es beispielsweise nicht nötig, bei relativ dunklen Bildsignalwerten zusätzlich zu dem hoch verstärkten Bildsignalwert auch noch den niedrig verstärkten Bildsignalwert zu speichern. Umgekehrt muss bei sehr hellen Bildsignalwerten zusätzlich zu dem zu speichernden niedrig verstärkten Bildsignalwert nicht auch noch der hoch verstärkte Bildsignalwert gespeichert werden, welcher zumeist ohnehin übersteuert ist. Der jeweils nicht benötigte Bildsignalwert wird also verworfen. Insbesondere wird für die Entscheidung, ob der erste oder der zweite Bildsignalwert zu komprimieren ist, ein entsprechender Grenzwert für die Größe des Bildsignalwerts definiert.

Gemäß einer Ausführungsform wird für einen Übergangsbereich der Grö-βe der Bildsignalwerte des jeweiligen Pixels (d.h. bei einer mittleren Helligkeit) lediglich der erste Bildsignalwert oder der zweite Bildsignalwert komprimiert. Mit anderen Werten wird in diesem Fall für jedes Pixel stets nur ein einziger Bildsignalwert komprimiert, wodurch der Rechen- und Speicheraufwand minimiert werden. Alternativ ist es auch möglich, für einen derartigen Übergangsbereich sowohl den ersten als auch den zweiten Bildsignalwert zu komprimieren, damit nach der Nach-Kalibrierung ein "weicher" Übergang zwischen den beiden Bildsignalwerten bzw. den zugrunde liegenden Verstärkungsfaktoren herbeigeführt werden kann.

Besonders vorteilhaft ist es jedoch, wenn für einen Übergangsbereich der Größe der Bildsignalwerte des jeweiligen Pixels entweder der erste Bildsignalwert oder der Bildsignalwert komprimiert wird, wobei zusätzlich ein Differenzwert komprimiert wird, welcher als Differenz zwischen dem ersten Bildsignalwert und dem zweiten Bildsignalwert ermittelt wird. Dadurch können "harte" Übergänge zwischen dem ersten und dem zweiten Bildsignalwert ebenfalls vermieden werden, und es kann zwischen den beiden Kanälen übergeblendet werden. Da der Differenzwert in der Regel klein ist, reicht für dessen Kodierung allerdings eine geringere Bittiefe aus. Gemäß noch einer weiteren bevorzugten Ausgestaltung der Erfindung sind die Kalibrierwerte unter Verwendung von nichtlinearen Quantisierungskennlinien erzeugt, wobei solche Kalibrierwerte, welche kleine Abweichungen von einem Normwert charakterisieren, kleinere Quantisierungsabstufungen aufweisen, als solche Kalibrierwerte, welche relativ große Abweichungen von dem Normwert charakterisieren. Als Normwert kann beispielsweise ein Mittelwert für den Offset bzw. eine mittlere Empfindlichkeit oder eine mittlere Verstärkung des Bildsensors definiert werden. Weiterhin ist es bevorzugt, wenn der zumindest eine erste Kalibrierwert und/oder der zumindest eine zweite Kalibrierwert gemeinsam mit den Bildsignalwerten komprimiert und dekomprimiert wird. Mit anderen Worten werden bei dieser Ausführungsform nicht nur die Bildsignalwerte, sondern innerhalb desselben Datenstroms auch der oder die ersten Kalibrierwerte und/oder der oder die zweiten Kalibrierwerte komprimiert, optional in komprimierter Form gespeichert und/oder übertragen, und später dekomprimiert. Die Bildsignalwerte und die betreffenden Kalibrierwerte bilden somit eine einzige Datei, d.h. einen gemeinsamen Bilddatensatz. Hierdurch stehen die betreffenden Kalibrierwerte bei der Nach-Kalibrierung unmittelbar zur Verfügung, um für die Nach-Kalibrierung verwendet werden zu können. Vorzugsweise werden zumindest der oder die zweiten Kalibrierwerte gemeinsam mit den Bildsignalwerten komprimiert und dekomprimiert, insbesondere wenn für den genannten zweiten Berechnungsschritt (Nach-Kalibrierung) lediglich der oder die zweiten Kalibrierwerte verwendet werden. Ein Komprimieren und mitübertragen der ersten Kalibrierwerte ist insbesondere dann von Vorteil, wenn für den genannten zweiten Berechnungsschritt auch der oder die ersten Kalibrierwerte verwendet werden sollen.

Bei dieser Ausführungsform können die betreffenden Kalibrierwerte (erster und/oder zweiter Kalibrierwert) als Metadaten, d.h. als visuell nicht wahrnehmbare Daten, in die Bildsignalwerte eingebettet werden, an die Bildsignalwerte angehängt, und/oder den Bildsignalwerten vorangestellt werden. Hierbei bilden die Bildsignalwerte und die betreffenden Kalibrierwerte einen gemeinsamen Bilddatensatz.

Insbesondere können im Falle von Laufbilddaten einer elektronischen Filmkamera, d.h. im Falle einer Bilddatensequenz, der oder die Kalibrierwerte in die Bildsignalwerte eines jeden einzelnen Bilds der jeweiligen Bilddatensequenz integriert werden. Hierdurch können der oder die Kalibrierwerte wahlweise aus jedem einzelnen Bild der jeweiligen Bilddatensequenz extrahiert werden, selbst wenn nur ein Teil der jeweiligen Bilddatensequenz betrachtet wird oder die Bilddatensequenz nur unvollständig vorliegt. Alternativ hierzu ist es allerdings auch möglich, dass der oder die Kalibrierwerte lediglich in einen Anfangsabschnitt oder einen Endabschnitt der jeweiligen Bilddatensequenz aufgenommen werden, wobei in die Bildsignalwerte eines jeden Bilds der jeweiligen Bilddatensequenz ein Verweis auf den Anfangsabschnitt bzw. den Endabschnitt der Bilddatensequenz integriert wird. Der oder die Kalibrierwerte werden somit nur zu Beginn oder am Ende der Bilddatensequenz übertragen.

Die Aufgabe der Erfindung wird ferner durch ein Bildaufzeichnungssystem mit den Merkmalen des unabhängigen Vorrichtungsanspruchs und insbesondere dadurch gelöst, dass jeder Kalibrierdatensatz zumindest einen ersten Kalibrierwert und zumindest einen zweiten Kalibrierwert umfasst, und dass die Auswertemittel eine erste Auswerteeinheit, welche dazu ausgelegt ist, teilweise korrigierte Bildsignalwerte unter Verwendung des zumindest einen ersten Kalibrierwerts zu berechnen, und eine zweite Auswerteeinheit umfassen, welche dazu ausgelegt ist, vollständig korrigierte Bildsignalwerte unter Verwendung des zumindest einen zweiten Kalibrierwerts zu berechnen, wobei die Kompressionseinrichtung zum Komprimieren der teilweise korrigierten Bildsignalwerte ausgelegt ist und die zweite Auswerteeinheit zum Berechnen der vollständig korrigierten Bildsignalwerte aus den dekomprimierten, teilweise korrigierten Bildsignalwerten ausgelegt ist.

Weitere vorteilhafte Ausgestaltungen der Erfindung sind in den Patentansprüchen, der Beschreibung und den Zeichnungen angegeben.

Die Erfindung wird nachfolgend anhand eines Ausführungsbeispiels mit Bezug auf die Zeichnungen erläutert. Es zeigen:
- Fig. 1: eine schematische Darstellung eines erfindungsgemä-βen Bildaufzeichnungssystems gemäß einem Ausführungsbeispiel,
- Fig. 2: eine schematische Darstellung einer Verteilung, bei der die relative Häufigkeit von Kalibrierwerten in Abhängigkeit von der Größe der Kalibrierwerte aufgetragen ist, und
- Fig. 3: eine schematische Darstellung einer nichtlinearen Quantisierungskennlinie zur Verwendung bei der Erzeugung der Kalibrierwerte.

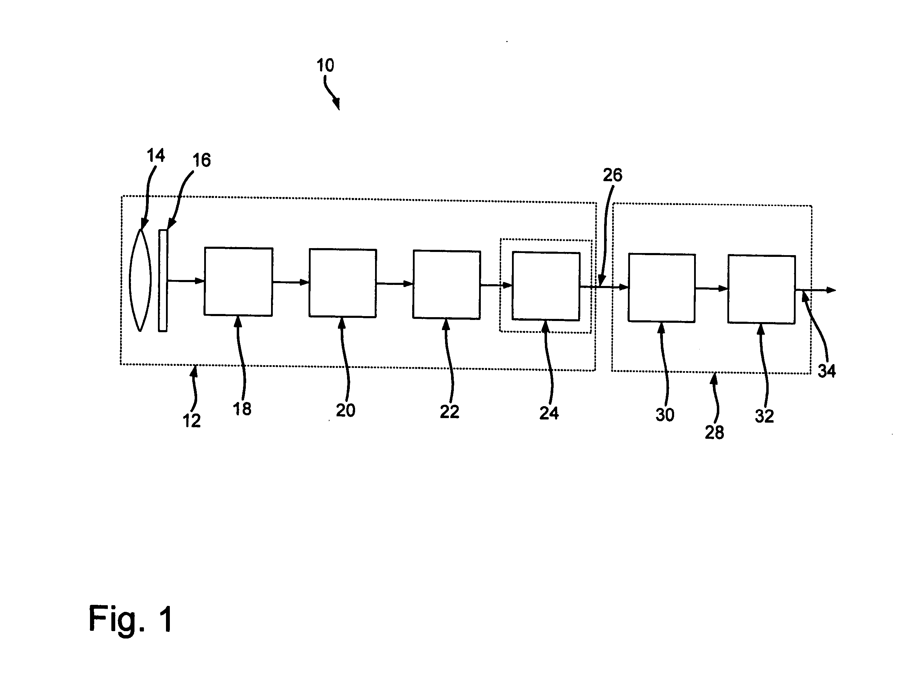

Gemäß Fig. 1 umfasst ein erfindungsgemäßes Bildaufzeichnungssystem 10 eine Kameraeinheit 12, welche insbesondere zur Aufnahme von Laufbildfilmen vorgesehen ist. Diese umfasst eine Linse 14, die eine (nicht dargestellte) Szene auf einen Bildsensor 16 abbildet, der eine Vielzahl von in Reihen und Spalten angeordneten lichtempfindlichen Pixeln aufweist. Mittels einer Ausleseeinrichtung 18 werden Bildsignalwerte aus den Pixeln ausgelesen. In einer ersten Auswerteeinheit 20 werden die von der Ausleseeinrichtung 18 ausgelesenen Bildsignalwerte einer nachstehend noch näher erläuterten Vor-Kalibrierung unterzogen, wobei erste Kalibrierwerte zur Anwendung gelangen. Die vor-kalibrierten Bildsignalwerte werden an eine Kompressionseinrichtung 22 übermittelt, welche die vor-kalibrierten Bildsignalwerte komprimiert, so dass sich die Datenmenge der Bildsignalwerte verringert.

Die kalibrierten und komprimierten Bildsignalwerte werden an eine Speichereinrichtung 24 übermittelt und in dieser gespeichert. Bei der Speichereinrichtung 24 kann es sich um bekannte Einrichtungen zur Datenaufzeichnung handeln, welche insbesondere auf optischen, magnetooptischen oder magnetischen Verfahren beruhen, beispielsweise Festplatten. Bevorzugt handelt es sich um einen Halbleiterspeicher.

Zur weiteren Auswertung der vor-kalibrierten und komprimierten Bildsignalwerte ist eine separate Verarbeitungseinheit 28 vorgesehen, welche an einen Ausgang 26 der Speichereinrichtung 24 anschließbar ist.

Die vor-kalibrierten und komprimierten Bildwertsignale werden an eine Dekompressionseinrichtung 30 übermittelt, welche aus den vor-kalibrierten und komprimierten Bildwertsignalen dekomprimierte Bildsignalwerte erzeugt, welche zu den vor-kalibrierten Bildsignalwerten zumindest im Wesentlichen identisch sind.

Die dekomprimierten Bildsignalwerte werden an eine zweite Auswerteeinheit 32 übermittelt, in welcher die dekomprimierten Bildsignalwerte unter Verwendung von zweiten Kalibrierwerten in einer nachstehend noch näher erläuterten Weise korrigiert, d.h. nach-kalibriert werden. Hierbei können optional auch die ersten Kalibrierwerte zusätzlich verwendet werden. Die so erzeugten vollständig korrigierten Bildsignalwerte werden an einem Ausgang 34 bereitgestellt. Von dort können sie beispielsweise an eine nicht dargestellte weitere Speichereinrichtung und/oder eine Wiedergabeeinrichtung wie einen Monitor oder Projektor übermittelt werden.

Bei dem hier dargestellten Ausführungsbeispiel ist die Speichereinrichtung 24 fest in die Kameraeinheit 12 integriert. Alternativ ist es selbstverständlich auch möglich, die Speichereinrichtung 24 auswechselbar in der Kameraeinheit 12 anzuordnen, was durch den die Speichereinrichtung 24 umgebenden, gestrichelten Rahmen angedeutet ist. Die aus der Kameraeinheit 12 entnommene Speichereinrichtung 24 kann dann in eine entsprechende, nicht dargestellte Aufnahme der Verarbeitungseinheit 28 eingeführt und mit der Dekompressionseinrichtung 30 verbunden werden. Weiterhin ist es auch möglich, die Kameraeinheit 12 und die Verarbeitungseinheit 28 in einer einzigen Baueinheit zu vereinigen.

Darüber hinaus ist es in einer weiteren Ausführungsvariante auch möglich, in der Kameraeinheit 12 lediglich die Linse 14, den Bildsensor 16 und die Ausleseeinrichtung 18 anzuordnen und die erste Auswerteeinheit 20, die Kompressionseinrichtung 22 und die Speichereinrichtung 24 in einer von der Kameraeinheit 12 getrennten Baueinheit anzuordnen. Optional können nicht nur die vor-kalibrierten Bildsignalwerte, sondern zusätzlich auch die ersten Kalibrierwerte und/oder die zweiten Kalibrierwerte in der Kompressionseinrichtung 22 gemeinsam mit den Bildsignalwerten komprimiert und nachfolgend in der Dekompressionseinrichtung 30 dekomprimiert werden, damit diese Kalibrierwerte in der zweiten Auswerteeinheit 32 aus dem übermittelten Bilddatensatz extrahiert werden können und somit in der zweiten Auswerteeinheit 32 unmittelbar zur Verfügung stehen. Vorzugsweise werden lediglich die zweiten Kalibrierwerte gemeinsam mit den Bildsignalwerten komprimiert und später wieder dekomprimiert.

Nachfolgend wird das erfindungsgemäße Verfahren zum Kalibrieren, Komprimieren und Dekomprimieren der Bildsignalwerte näher erläutert.

Zur Durchführung der hier beschriebenen zweistufigen Kalibrierung ist es zunächst erforderlich, für den speziell verwendete Bildsensor 16 Kalibrierdatensätze zu erzeugen, welche für jedes Pixel eine Anzahl von Kalibrierwerten umfassen. Dies geschieht mittels einer nicht dargestellten Kalibriereinrichtung. Diese nachfolgend auch als Gesamtkalibrierwerte bezeichneten Kalibrierwerte umfassen zum Beispiel wenigstens einen Offset-Kalibrierwert und wenigstens einen Gain-Kalibrierwert. Die Offset-Kalibrierwerte werden erzeugt, indem der Bildsensor 16 abgedunkelt und dann mittels der Ausleseeinrichtung 18 ausgelesen wird. Zur Ermittlung der Gain-Kalibrierwerte wird der Bildsensor 16 homogen beleuchtet, d.h. jedes Pixel wird mit der gleichen Lichtintensität beleuchtet. Der Bildsensor 16 wird wiederum mittels der Auswerteeinrichtung 18 ausgelesen. Das daraus gewonnene Gain-Kalibrierbild wird auf den Mittelwert aller Bildsignalwerte normiert. Anschließend erfolgt eine Invertierung, d.h. der Kehrwert der Bildsignalwerte wird berechnet.

Zur Durchführung der Kalibrierung wird in dem hier dargestellten Beispiel pixelweise der jeweilige Offset-Korrekturwert von dem Bildsignalwert subtrahiert. Das Ergebnis dieser Subtraktion wird mit dem jeweiligen Gain-Kalibrierwert multipliziert.

Falls zusätzlich zu der hier beschriebenen linearen Gain-Korrektur, mit der lediglich lineare Abweichungen der Empfindlichkeit der Pixel korrigiert werden können, zusätzlich auch eine Korrektur von unterschiedlichen Nichtlinearitäten der Verstärkungskennlinie der Pixel gewünscht ist, können weitere Kalibrierwerte ermittelt werden. Hierfür werden mehrere Bilder bei homogener Beleuchtung jeweils unterschiedlicher Intensität aufgenommen. Dadurch ergeben sich für jedes Pixel mehrere Messpunkte, die durch eine geeignete Funktion, beispielsweise durch ein Polynom dritter Ordnung gefittet werden können. Die Koeffizienten dieses Polynoms bilden somit die Kalibrierwerte für jedes Pixel.

Nun werden aus diesen Gesamtkalibrierwerten erste oder Vor-Kalibrierwerte, welche in der ersten Auswerteeinheit 20 abgelegt werden, und zweite oder Nach-Kalibrierwerte, welche in der zweiten Auswerteeinheit 32 abgelegt werden, erzeugt. Diese Erzeugung der Vor- und Nach-Kalibrierwerte kann auf verschiedene Weisen erfolgen, wie eingangs bereits erwähnt wurde. So können, falls lediglich ein Kalibrierwert zur Offset-Korrektur und ein Kalibrierwert zur Gain-Korrektur ermittelt wurde, die beiden Korrekturwerte beispielsweise in Vor- und Nach-Kalibrierwerte aufgeteilt werden.

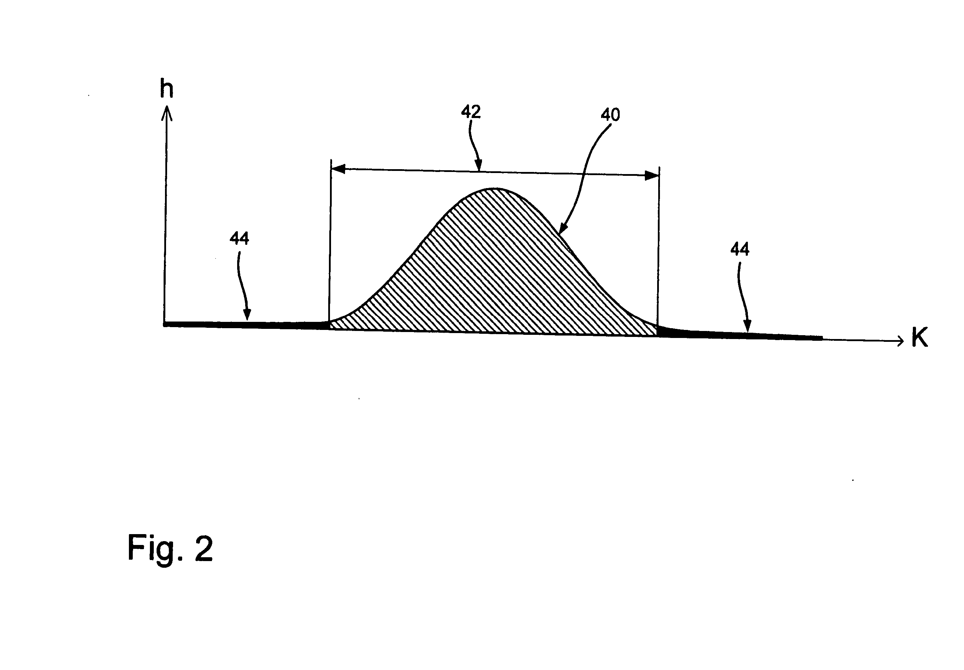

Die Erzeugung geeigneter Vor-Kalibrierwerte wird anhand der Fig. 2 erläutert. Diese zeigt schematisch und lediglich qualitativ eine Verteilung, bei der jeweils die relative Häufigkeit h für das Auftreten eines jeweiligen Kalibrierwerts K, beispielsweise für Kalibrierwerte zur Korrektur des Offsets, in einem Bild gegen die Größe dieses Kalibrierwerts K aufgetragen ist. Die Verteilung weist üblicherweise einen Peak 40 bestimmter Breite 42 mit einem einzigen Maximum auf. An den Peak 40 schließen sich zu beiden Seiten Ausläufer 44 an, die sehr kleine und sehr große Kalibrierwerte repräsentieren, die jedoch mit einer sehr geringen Häufigkeit, mitunter auch nur einmal oder zweimal je Bild, auftreten. Die Ausläufer 44 können sich noch deutlich weiter erstrecken als in Fig. 2 dargestellt. Diese Häufigkeitsverteilung kann man ausnutzen, um durch geschickte Auswahl der Vor-Kalibrierwerte ein Optimum bezüglich des Rechenaufwands für die Vor-Kalibrierung einerseits und der Kompressionseffizienz andererseits zu erreichen. Hierbei ist es unerheblich, wenn allein aufgrund der Vor-Kalibrierung noch keine korrekte visuelle Wahrnehmung des jeweiligen Bildes erzielt wird.

Falls gemäß eines beispielhaften Kalibrierverfahrens jeder der Kalibrierwerte eine Genauigkeit von 16 Bit besitzt, ergeben sich ein erster Offset-Kalibrierwert und ein erster Gain-Kalibrierwert für die Vor-Kalibrierung und ein zweiter Offset- und ein zweiter Gain-Kalibrierwert für die Nach-Kalibrierung, wobei jeder dieser Kalibrierwerte eine Genauigkeit von 8 Bit aufweist. Grundsätzlich sind jedoch auch andere, nicht symmetrische Aufteilungen der Genauigkeit möglich. So kann die Genauigkeit der Vor-Kalibrierwerte kleiner sein als die Genauigkeit der Nach-Kalibrierwerte und umgekehrt. Weiterhin ist es möglich, Nach-Kalibrierwerte zu verwenden, die die gleiche Genauigkeit wie die ursprünglich ermittelten, vollständigen Kalibrierwerte besitzen und unter Berücksichtigung der bei ihrer Anwendung bereits erfolgten Vor-Kalibrierung erzeugt wurden.

Im vorstehend genannten Beispiel können die ersten Kalibrierwerte jeweils die acht niederwertigen Bits und die zweiten Kalibrierwerte die acht höherwertigen Bits umfassen. Die für die Vor-Kalibrierung genutzten Kalibrierwerte umfassen in dem Fall zum Beispiel nur die in Fig. 2 innerhalb der Peakbreite 42 vorhandenen Kalibrierwerte. Dadurch ist es möglich, bereits bei der Vor-Kalibrierung die meisten Pixel mit der feinstmöglichen Auflösung zu korrigieren. Bei diesem Ausführungsbeispiel werden also lediglich solche Pixel, deren Kalibrierwerte eine sehr hohe Abweichung von dem jeweiligen Mittelwert aufweisen, durch die Vor-Kalibrierung nicht vollständig korrigiert. Dabei wird jedoch davon ausgegangen, dass es bezogen auf die Gesamtzahl der Pixel nur sehr wenige Pixel gibt, für die keine vollständige Kalibrierung durchgeführt wurde, so dass von diesen nicht korrigierten Pixeln nur eine unwesentliche Beeinträchtigung der nachfolgenden Kompression zu erwarten ist.

Es ist jedoch auch eine umgekehrte Zuordnung der höher- und niederwertigen Bits möglich. Es wird dann der gesamte Wertebereich genutzt, jedoch mit der Folge einer gröberen Quantisierung der Vor-Kalibrierwerte.

Schließlich kann auch ein beliebiger Teilbereich benachbarter Bits als Vor-Kalibrierwert genutzt werden, d.h. es werden sowohl höher- als auch niederwertige Bits, z.B. jeweils die vier Bits mit der niedrigsten und der höchsten Wertigkeit, verworfen, so dass ein Kompromiss zwischen einer ausreichenden Quantisierung und der Berücksichtigung eines ausreichend großen Wertebereichs gefunden werden kann.

Sinnvollerweise wird die Auswahl des für die Erzeugung der Vor-Kalibrierwerte verwendeten Wertebereichs so getroffen, dass sich die Effizienz der nachfolgenden Kompression verbessert, auch wenn diese Vor-Kalibrierung selbst noch nicht für eine korrekte visuelle Wahrnehmung der Bilder ausreichen sollte.

Nach der Dekompression in der Dekompressionseinrichtung 30 erfolgt dann in der zweiten Auswerteeinheit 32 die Nach-Kalibrierung auf der Grundlage der Nach-Kalibrierwerte. In diesem Schritt würden bei dem oben genannten Beispiel dann tatsächlich nur noch diejenigen Pixel kalibriert, die die vorstehend genannte hohe Abweichung vom jeweiligen Mittelwert aufweisen und daher zur Erreichung der optimalen Bildqualität noch nach-kalibriert werden müssen.

Falls die gesamte Kalibrierung mittels eines bereits vorstehend erläuterten Polynoms dritter Ordnung erfolgt, kann die Aufteilung der Kalibrierwerte bzw. Polynomkoeffizienten zum Beispiel derart erfolgen, dass die Koeffizienten der nullten und ersten Ordnung der Vor-Kalibrierung zugeordnet und in der ersten Auswerteeinheit 20 hinterlegt werden, während die Kalibrierwerte oder Polynomkoeffizienten zweiter und dritter Ordnung der Nach-Kalibrierung zugeordnet und in der zweiten Auswerteeinheit 32 hinterlegt werden. In der ersten Auswerteeinheit 20 erfolgt im Rahmen der Vor-Kalibrierung dann demnach zunächst eine Offset- und Gain-Korrektur, während in der zweiten Auswerteeinheit 32 im Rahmen der Nach-Kalibrierung Nichtlinearitäten zweiter und dritter Ordnung korrigiert werden.

Selbstverständlich sind auch andere Zuordnungen der Kalibrierwerte zur Vor- bzw. Nach-Kalibrierung denkbar. So können die Aufteilung hinsichtlich der Genauigkeit und hinsichtlich der Polynomkoeffizienten auch miteinander kombiniert werden.

Die vorstehend beschriebene zweistufige Kalibrierung kann auch auf solche Bildsensoren 16 angewandt werden, welche eine so genannte Dual-Gain-Architektur aufweisen. Bei einem derartigen Sensor wird jedes Pixel über zwei getrennte Ausgänge mit unterschiedlicher Verstärkung ausgelesen, so dass ein hoher Kontrastumfang erreicht werden kann. Bei einer derartigen Dual-Gain-Architektur würde sich die Anzahl der benötigten Kalibrierwerte gegenüber einer Single-Gain-Architektur verdoppeln. Es ist jedoch möglich, während der Vor-Kalibrierung einen einzigen Gain-Korrekturwert auf beide Kanäle anzuwenden. Falls tatsächlich noch gewisse Unterschiede zwischen beiden Kanälen bestehen, können diese im Rahmen der Nach-Kalibrierung korrigiert werden.

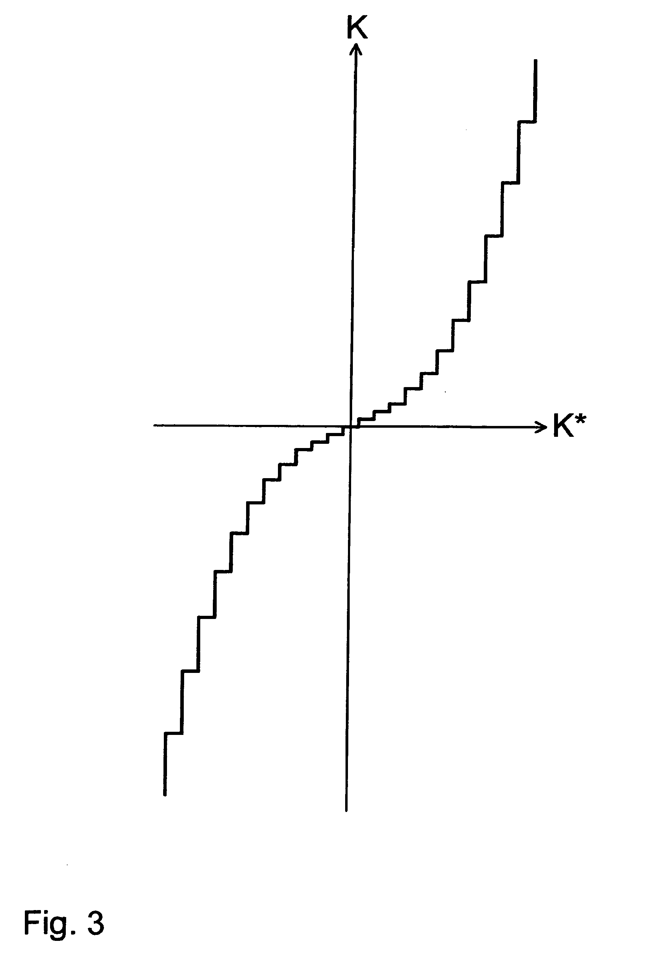

Eine weitere Reduzierung des Datenverarbeitungsaufwands bei der Kalibrierung kann dadurch erreicht werden, dass die Kalibrierwerte unter Verwendung von nichtlinearen Quantisierungskennlinien codiert werden. Dies wird nachfolgend mit Bezug auf Fig. 3 erläutert. Bei dem dort dargestellten Graph sind auf der Abszisse die codierten Kalibrierwerte K* aufgetragen, während auf der Ordinate die ursprünglich ermittelten Kalibrierwerte K aufgetragen sind. Der Ursprung des gezeigten Koordinatensystems ist so gewählt, dass er einem Normwert der betrachteten Kalibrierwerte entspricht. Wie aus Fig. 3 ersichtlich ist, weisen solche Kalibrierwerte K, welche eine kleine Abweichung von dem Normwert charakterisieren, kleinere Quantisierungsabstufungen auf als solche Kalibrierwerte K, welche große Abweichungen von dem Normwert charakterisieren. Der genannte Normwert steht beispielsweise für den Mittelwert des Offsets oder den Mittelwert des Gains für alle Pixel des Bildsensors.

Zusammenfassend wird durch die erfindungsgemäße zweistufige Kalibrierung der Rechenaufwand bzw. die Menge an Kalibrierdaten pro Pixel, die in der Kamera vor Durchführung einer Datenkompression notwendig sind, deutlich reduziert. Trotz der unvollständigen Kalibrierung im ersten Kalibrierschritt können die Bildsignalwerte nahezu genauso gut komprimiert werden wie vollständig kalibrierte Bildsignalwerte, d.h. die benötigte Speicherbandbreite ist hinreichend gering.

Der zweite Kalibrierschritt zur Erzeugung vollständig kalibrierter Bildsignalwerte kann dann beim Dekomprimieren des Bilddatenstroms in der Verarbeitungseinheit 28, beispielsweise einem externen Computer erfolgen. Insbesondere kann die Dekompression und Kalibrierung dort mit einer geringeren Geschwindigkeit erfolgen, z.B. mit einer Geschwindigkeit, mit der eine zuvor aufgenommene Bildsequenz letztendlich wiedergegeben werden soll, also beispielsweise mit 30 Bildern pro Sekunde, während die ursprüngliche Bildsequenz mit 200 Bildern pro Sekunde aufgenommen wurde.

### Bezugszeichenliste

- 10: Bildaufzeichnungssystem
- 12: Kameraeinheit
- 14: Linse
- 16: Bildsensor
- 18: Ausleseeinrichtung
- 20: erste Auswerteeinheit
- 22: Kompressionseinrichtung
- 24: Speichereinrichtung
- 26: Ausgang
- 28: Verarbeitungseinheit
- 30: Dekompressionseinrichtung
- 32: zweite Auswerteeinheit
- 34: Ausgang
- 40: Peak der Häufigkeitsverteilung
- 42: Breite des Peaks
- 44: Ausläufer der Häufigkeitsverteilung

- h: relative Häufigkeit
- K: Kalibrierwert
- K*: codierter Kalibrierwert

## Patentansprüche

1. Verfahren zum Kalibrieren, Komprimieren und Dekomprimieren von Bildsignalwerten eines Bildsensors, der eine Vielzahl von in Reihen und Spalten angeordneten lichtempfindlichen Pixeln aufweist, mit den Schritten:
Auslesen der Bildsignalwerte,
Komprimieren der Bildsignalwerte, und
Dekomprimieren der komprimierten Bildsignalwerte,
wobei die Bildsignalwerte unter Verwendung von Kalibrierdatensätzen kalibriert werden, welche für jedes Pixel eine Anzahl von Kalibrierwerten umfassen,
**dadurch gekennzeichnet,**
**dass** jeder Kalibrierdatensatz zumindest einen ersten Kalibrierwert und zumindest einen zweiten Kalibrierwert umfasst,
wobei das Kalibrieren der Bildsignalwerte einen ersten Berechnungsschritt umfasst, der vor dem Komprimieren der Bildsignalwerte durchgeführt wird, um unter Verwendung des zumindest einen ersten Kalibrierwerts teilweise korrigierte Bildsignalwerte zu berechnen, und wobei das Kalibrieren der Bildsignalwerte einen zweiten Berechnungsschritt umfasst, der nach dem Dekomprimieren der Bildsignalwerte durchgeführt wird, um unter Verwendung des zumindest einen zweiten Kalibrierwerts vollständig korrigierte Bildsignalwerte zu berechnen.

2. Verfahren nach Anspruch 1,
**dadurch gekennzeichnet,**
**dass** der Kompressionsschritt ein Komprimieren der teilweise korrigierten Bildsignalwerte umfasst und/oder dass der zweite Berechnungsschritt das Berechnen der vollständig korrigierten Bildsignalwerte aus den dekomprimierten, teilweise korrigierten Bildsignalwerten umfasst.

3. Verfahren nach Anspruch 1 oder 2,
**dadurch gekennzeichnet,**
**dass** das Verfahren ferner ein Speichern der komprimierten, teilweise korrigierten Bildsignalwerte umfasst.

4. Verfahren nach einem der vorhergehenden Ansprüche,
**dadurch gekennzeichnet,**
**dass** der zumindest eine erste Kalibrierwert wenigstens einen Offset-Korrekturwert und/oder einen Gain-Korrekturwert umfasst.

5. Verfahren nach Anspruch 4,
**dadurch gekennzeichnet,**
**dass** der zweite Kalibrierwert zumindest einen Wert zur Korrektur von Nichtlinearitäten der Pixelempfindlichkeit umfasst.

6. Verfahren nach einem der vorhergehenden Ansprüche,
**dadurch gekennzeichnet,**
**dass** das Auslesen der Bildsignalwerte zumindest ein erstes und ein zweites Auslesen umfasst, um für jedes Pixel zumindest einen ersten und einen zweiten Bildsignalwert zu erzeugen, wobei der erste Bildsignalwert und der zweite Bildsignalwert unter Verwendung von unterschiedlichen Verstärkungsfaktoren erzeugt werden.

7. Verfahren nach Anspruch 6,
**dadurch gekennzeichnet,**
**dass** zum Berechnen der teilweise korrigierten Bildsignalwerte für den ersten Bildsignalwert und den zweiten Bildsignalwert des jeweiligen Pixels zumindest ein gemeinsamer erster Kalibrierwert, insbesondere ein gemeinsamer Gain-Korrekturwert, verwendet wird, wobei zum Berechnen der vollständig korrigierten Bildsignalwerte für den ersten Bildsignalwert und den zweiten Bildsignalwert des jeweiligen Pixels separate zweite Kalibrierwerte verwendet werden.

8. Verfahren nach Anspruch 6 oder 7,
**dadurch gekennzeichnet,**
**dass** für zumindest einige der Pixel in Abhängigkeit von der Größe des ersten Bildsignalwerts oder des zweiten Bildsignalwerts des jeweiligen Pixels nur der erste Bildsignalwert oder der zweite Bildsignalwert komprimiert wird.

9. Verfahren nach einem der Ansprüche 6 bis 8,
**dadurch gekennzeichnet,**
**dass** für einen Übergangsbereich der Größe des ersten Bildsignalwerts und des zweiten Bildsignalwerts des jeweiligen Pixels der erste Bildsignalwert oder der zweite Bildsignalwert komprimiert wird, oder
**dass** für einen Übergangsbereich der Größe des ersten Bildsignalwerts und des zweiten Bildsignalwerts des jeweiligen Pixels entweder der erste Bildsignalwert oder der zweite Bildsignalwert komprimiert wird, wobei zusätzlich ein Differenzwert komprimiert wird, welcher einer Differenz zwischen dem ersten Bildsignalwert und dem zweiten Bildsignalwert entspricht.

10. Verfahren nach einem der vorhergehenden Ansprüche,
**dadurch gekennzeichnet,**
**dass** die Kalibrierwerte unter Verwendung von nichtlinearen Quantisierungskennlinien erzeugt sind, wobei solche Kalibrierwerte, welche kleine Abweichungen von einem Normwert charakterisieren, kleinere Quantisierungsabstufungen aufweisen als solche Kalibrierwerte, welche große Abweichungen von dem Normwert charakterisieren.

11. Verfahren nach einem der vorhergehenden Ansprüche,
**dadurch gekennzeichnet,**
**dass** die Bittiefe des ersten Kalibrierwerts kleiner ist als die Bittiefe eines den ersten und den zweiten Kalibrierwert umfassenden Gesamtkalibrierwerts.

12. Verfahren nach einem der vorhergehenden Ansprüche,
**dadurch gekennzeichnet,**
**dass** der zumindest eine erste Kalibrierwert und/oder der zumindest eine zweite Kalibrierwert gemeinsam mit den Bildsignalwerten komprimiert und dekomprimiert wird.

13. Verfahren nach Anspruch 12,
**dadurch gekennzeichnet,**
**dass** der zumindest eine erste Kalibrierwert und/oder der zumindest eine zweite Kalibrierwert als Metadaten in die Bildsignalwerte eingebettet wird und/oder an die Bildsignalwerte angehängt wird und/oder den Bildsignalwerten vorangestellt wird.

14. Bildaufzeichnungssystem, mit:
einem Bildsensor (16), der eine Vielzahl von in Reihen und Spalten angeordneten lichtempfindlichen Pixeln aufweist,
einer Ausleseeinrichtung (18) zum Auslesen von Bildsignalwerten aus den Pixeln,
einer Kalibriereinrichtung zur Erzeugung von Kalibrierdatensätzen,
welche für jedes Pixel eine Anzahl von Kalibrierwerten umfassen,
einer Kompressionseinrichtung (22) zum Komprimieren der Bildsignalwerte,
einer Dekompressionseinrichtung (30) zum Dekomprimieren der komprimierten Bildsignalwerte, und
Auswertemitteln (20, 32), welche dazu ausgelegt sind, die Bildsignalwerte unter Verwendung der Kalibrierdatensätze zu kalibrieren,
**dadurch gekennzeichnet,**
**dass** jeder Kalibrierdatensatz zumindest einen ersten Kalibrierwert und zumindest einen zweiten Kalibrierwert umfasst, und
**dass** die Auswertemittel eine erste Auswerteeinheit (20), welche dazu ausgelegt ist, teilweise korrigierte Bildsignalwerte unter Verwendung des zumindest einen ersten Kalibrierwerts zu berechnen, und eine zweite Auswerteeinheit (32) umfassen, welche dazu ausgelegt ist,
vollständig korrigierte Bildsignalwerte unter Verwendung des zumindest einen zweiten Kalibrierwerts zu berechnen,
wobei die Kompressionseinrichtung (22) zum Komprimieren der teilweise korrigierten Bildsignalwerte ausgelegt ist und die zweite Auswerteeinheit (32) zum Berechnen der vollständig korrigierten Bildsignalwerte aus den dekomprimierten, teilweise korrigierten Bildsignalwerten ausgelegt ist.

15. Bildaufzeichnungssystem nach Anspruch 14,
**gekennzeichnet durch** eine Speichereinrichtung (24) zum Speichern der komprimierten, teilweise korrigierten Bildsignalwerte.
